# EUROPEAN PATENT APPLICATION

(11) **EP 4 779 831 A1**
(43) Date of publication of application: **22.07.2026**
(21) Application number: 25193143.2
(22) Date of filing: 31.07.2025
(51) Int. Cl.: H02J 3/28, H02J 3/32, H02J 3/38, H02J 15/50

(54) **HYBRID RENEWABLE ENERGY GENERATION AND HYDROGEN-BASED STORAGE PLANT**

(30) Priority: 16.01.2025 IT 202500000708
(71) Applicant: K&B SRLS, 30037 Scorze' (VE) (IT)
(72) Inventor: CARRER, Manuel, 36100 Vicenza (VI) (IT)
(74) Representative: Gallo, Luca

(57) **Abstract**

Electric energy generation and storage plant (100), comprising an electrical user (200), an electric power generator (10) from renewable sources, and a hydrogen generator (20) configured to produce hydrogen and oxygen in gaseous form by electrolysis using water and at least part of the electric power produced by the electric power generator (10).

The plant (100) further comprises a storage device (30) connected to the hydrogen generator (20) to store at least part of the hydrogen produced by the hydrogen generator (20), and a fuel cell (40) connected to the storage device (30) to produce electric power using hydrogen stored in the storage device (30). The plant (100) further comprises an electrical energy storage device (50) electrically connected to the electric power generator (10) and the fuel cell (40) to receive electric power from at least one of them. The plant (100) further comprises an electrical energy conversion device (80) electrically connected to the electrical user (200), the electric power generator (10), and the electrical energy storage device (50). The plant (100) further comprises at least one control module (60) operatively connected to the fuel cell (40), the electrical energy storage device (50), and the electrical energy conversion device (80), and configured to control the charging of the electrical energy storage device (50) by means of the fuel cell (40) when below a minimum stored energy threshold of the electrical energy storage device (50).

## Description

### Field of application

The present invention relates to an electric energy generation and storage plant.

### State of the art

As is known, the use of ecological renewable energy vectors faces several significant challenges that must be addressed in order to make the so-called "energy transition" feasible.

In particular, the management of electric power produced from renewable sources and any energy surplus certainly represents a critical aspect, since renewable energies are inevitably subject to variations in availability.

From this perspective, one option for using the energy surplus among the various available involves storing the electric power in order to use it later when production is lower than demand.

One of the best-known electric energy storage systems involves the use of batteries. However, currently available batteries have a relatively complex and costly structure, characterized by considerable size and weight. Furthermore, such batteries generally offer relatively limited operational flexibility.

The use of hydrogen represents a new frontier for storing electric power in excess of actual demand. In particular, the energy surplus is used to electrolyze water, creating green hydrogen. This process produces a clean fuel that can be stored and subsequently used in fuel cells or for other purposes. Fuel cells are capable of reconverting hydrogen into electricity, providing an efficient way to use the stored hydrogen. However, a critical aspect of hydrogen use is related, in particular, to the storage of hydrogen itself. Indeed, to maximize energy density, stored hydrogen must be subjected to pressures up to 700 bar, so that it can be contained in relatively limited spaces. This clearly creates significant safety issues related to extreme pressure and requires substantial energy input to compress hydrogen to such pressures.

### Presentation of the invention

The purpose of the present invention is to provide an electric energy generation and storage plant that overcomes the drawbacks of the known art mentioned above. Within this purpose, one objective of the invention is to provide a plant capable of efficiently exploiting energy sources alternative to the main grid and of maximizing the amount of electric power produced and stored.

Another objective of the invention is to provide a plant that is versatile and easily adaptable substantially to all civil and industrial users.

A further objective of the invention is to provide a plant that, due to its particular structural characteristics, is capable of ensuring the highest levels of reliability and safety in use.

These objectives, and others that will become apparent hereinafter, are achieved by an electric energy generation and storage plant, characterized in that it comprises at least one electric power generator configured to produce electric power from renewable sources, at least one hydrogen generator configured to produce hydrogen and oxygen in gaseous form using water and at least part of the electric power produced by said at least one electric power generator, at least one storage device for at least part of the hydrogen produced by said at least one hydrogen generator and/or hydrogen supplied from external sources, at least one fuel cell configured to produce electric power using at least part of the hydrogen stored in said at least one storage device and/or at least part of hydrogen supplied from external sources, at least one electrical energy storage device for at least part of the electric power produced by said at least one electric power generator and/or at least part of the electric power produced by said at least one fuel cell, and at least one control module configured to supply electric power to at least one electrical user by drawing it sequentially in the following order from said at least one electric power generator and from said at least one electrical energy storage device.

### Brief description of the drawings

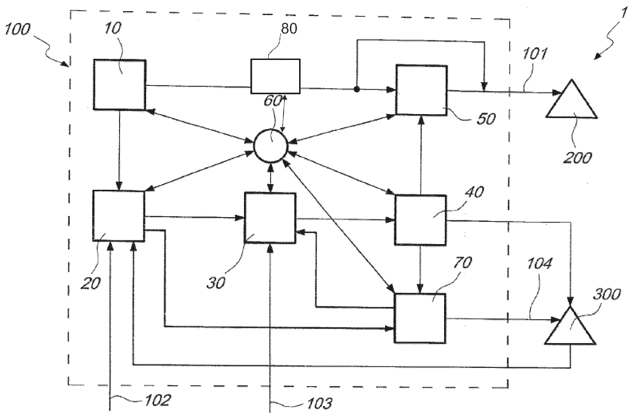

Further features and advantages will become more apparent from the description of a preferred, yet non-exclusive, embodiment of an electric energy generation and storage plant according to the invention, schematically illustrated, by way of example and not limitation, in figure 1.

### Detailed description of an example of a preferred embodiment

With reference to the cited figure 1, an electric energy generation and storage plant according to the present invention is indicated as a whole with 100.

Plant 100 is suitable, in particular, to supply electric power to at least one electrical user 200, such as a domestic or industrial network, or to provide electric power to an energy provider, for example according to a "net metering" scheme. Furthermore, plant 100 also allows supplying thermal energy to at least one thermal user 300, such as residential complexes or industrial facilities.

According to the present invention and in accordance with a possible embodiment, plant 100 comprises at least one electrical user 200 and at least one electric power generator 10 from renewable sources.

Plant 100 further comprises at least one hydrogen generator 20 configured to produce hydrogen and oxygen in gaseous form by electrolysis using water and at least part of the electric power produced by the electric power generator 10.

Plant 100 further comprises at least one storage device 30 connected to the hydrogen generator 20 to store at least part of the hydrogen produced by the hydrogen generator 20 itself.

Plant 100 further comprises at least one fuel cell 40 connected to the storage device 30 to produce electric power using hydrogen stored in the storage device 30.

Plant 100 further comprises at least one electrical energy storage device 50 electrically connected to the electric power generator 10 and the fuel cell 40 to receive electric power from at least one of them.

Plant 100 further comprises at least one electrical energy conversion device 80 electrically connected to the electrical user 200, the electric power generator 10, and the electrical energy storage device 50.

Plant 100 further comprises at least one control module 60 operatively connected to the fuel cell 40, the electrical energy storage device 50, and the electrical energy conversion device 80. Control module 60 is configured to control the charging of the electrical energy storage device 50 by means of the fuel cell 40 when below a minimum stored energy threshold of the electrical energy storage device 50.

Advantageously, the minimum stored energy threshold is represented by a state of charge of the electrical energy storage device 50 of 50%, preferably 40%, and more preferably less than 30%.

In particular, the electric power generator 10 is configured to produce electric power from renewable sources and is connected or connectable, for example via a first output terminal 101, to the electrical user 200 to provide alternative electric power to the main grid. For example, electric power generator 10 may be a photovoltaic generator, a wind generator, a hydroelectric generator, a geothermal generator, and so on; such renewable energy sources can be used individually or combined.

Advantageously, the electric power generator 10 is also connected to the electrical energy storage device 50 so as to store at least part of the electric power not used by the electrical user 200. Preferably, the portion of electric power to be supplied to the electrical user 200 or to the electrical energy storage device 50 is regulated by control module 60, in a manner described hereinafter. For example, the electrical energy storage device 50 may comprise one or more supercapacitors, in case short charging times are desired.

Preferably, the electrical energy storage device 50 may also comprise one or more chemical batteries, for example lithium batteries, in case a greater amount of electric power storage is desired.

In particular, the electrical energy storage device 50 may comprise both one or more supercapacitors and one or more chemical batteries.

Furthermore, the electric power generator 10 is connected (in particular electrically connected) also to the hydrogen generator 20, which comprises an electrolyser, or electrolytic cell, configured to produce hydrogen and oxygen in gaseous form using water supplied from an external source, for example via a first input terminal 102, and electric power from the same electric power generator 10.

Advantageously, the hydrogen generator 20 is associated with the storage device 30, in which at least part of the hydrogen produced via electrolysis and/or hydrogen from external sources, for example via a second input terminal 103, can be stored. Preferably, the hydrogen storage device 30 is of solid-state type and based on hydrogen storage in metal hydrides, such as magnesium hydrides or transition metals and complex metal hydrides, typically containing sodium, aluminum, or boron and lithium or calcium. Metal hydrides can absorb hydrogen and release it while operating at low pressure.

Otherwise, without departing from the protective scope of the present invention, the storage device 30 is configured to store hydrogen in gaseous form, at a pressure between 100 and 250 bar, preferably between 150 and 220 bar, and more preferably between 180 and 210 bar, allowing reduced costs and dimensions compared to a solid-state type storage device 30.

In particular, the storage device 30 comprises a tank which is preferably made of a composite material, advantageously carbon fiber.

Preferably, the tank of the storage device 30 has a parallelepiped shape, in particular with a polygonal base, for example quadrangular, so as to rest stably on its base when the storage device 30 itself is placed on the ground.

The storage device 30 supplies hydrogen to the fuel cell 40, which is configured to produce electric power. Advantageously, the fuel cell 40 is connected to the electrical energy storage device 50 so as to store at least part of the electric power produced. Thus, the electric power supplied to the electrical energy storage device 50 is provided alternatively by the electric power generator 10 and the fuel cell 40, in a manner described hereinafter (or the electrical energy storage device 50 may be supplied simultaneously by the electric power generator 10 and the fuel cell 40).

Advantageously, when the state of charge of the electrical energy storage device 50 falls below the aforesaid minimum threshold, the control module 60 is configured to control the charging of the electrical energy storage device 50, in particular until reaching a stop value, for example 60%, preferably 70%, and more preferably 80% of the state of charge of the electrical energy storage device 50. **In** particular, when the charging of the electrical energy storage device 50 reaches such stop value, the control module 60 is configured to stop charging the electrical energy storage device 50 via the fuel cell 40. Of course, if at that time the control module 60 stops charging the electrical energy storage device 50 via the fuel cell 40, the storage device 50 may continue to be charged by the electric power generator 10 to store unused electric power produced by the generator 10 and not used by the electrical user 200.

Advantageously, the electrical energy conversion device 80 is arranged to receive an input voltage (supplied by the electric power generator 10) and provide an output voltage to at least one of the electrical energy storage device 50 and the electrical user 200. Advantageously, the electrical energy conversion device 80 is arranged to selectively convert the input voltage into a first output voltage supplied to the electrical energy storage device 50 or into a second output voltage supplied to the electrical user 200.

Preferably, the first output voltage is a direct current (DC) voltage (for charging the electrical energy storage device 50), and the second voltage is an alternating current (AC) voltage (for example to supply an electrical user 200 operating on AC).

In particular, the electrical energy conversion device 80 comprises a first converter configured to generate the first output voltage and a second converter configured to generate the second output voltage. For example, if the input voltage is DC, the first converter is a DC/DC converter and the second converter is a DC/AC converter. Advantageously, plant 100 comprises a switch, not shown, which is electrically interposed between the electrical energy conversion device 80 and the electrical user 200 and is operatively connected to the control module 60, with the latter which, more in detail, is configured to command the switch to selectively connect the electrical energy conversion device 80 to the electrical user 200 or to the electrical energy storage device 50. Advantageously, the fuel cell 40, in addition to producing electric power, produces hot water which can first be supplied to the thermal user 300 and subsequently, once its temperature is reduced, may be supplied to the hydrogen generator 20.

In accordance with a possible embodiment, plant 100 also comprises a thermal recovery device 70 configured to recover at least part of the thermal energy produced by the hydrogen generator 20 and/or at least part of the thermal energy produced by the fuel cell 40. Such thermal energy may be supplied, for example via a second output terminal 104, to the thermal user 300, or may be used to assist the hydrogen release phase from the storage device 30.

Advantageously, the thermal recovery device 70 of plant 100 uses a carrier fluid, in particular water, advantageously obtained from the fuel cell 40 during electric power production, to supply the electrical energy storage device 50.

The operation of the electric energy generation and storage plant according to the invention, previously described in structural terms, is substantially as follows.

The control module 60, given a certain electric power demand from the electrical user 200, draws such electric power from one or more sources according to a predefined order.

In particular, the control module 60 is configured to first draw electric power from the electric power generator 10. If the amount of electric power supplied by the electric power generator 10 is insufficient to meet the demand of the electrical user 200, the missing electric power is drawn from the electrical energy storage device 50.

If, on the other hand, the electric power supplied by the electric power generator 10 exceeds that required by the electrical user 200, the energy surplus is split between the electrical energy storage device 50 and the hydrogen generator 20. In particular, the electrical energy storage device 50 is first recharged, and when it is fully charged or has reached a predefined charge level, the excess electric power is supplied to the hydrogen generator 20, which uses it, together with water supplied via the first input terminal 102, to produce hydrogen and oxygen in gaseous form. The hydrogen produced by the hydrogen generator 20 is conveyed to the storage device 30 where it is stored, particularly in solid state bonded to metal hydrides, or in gaseous form.

When the amount of electric power available from the electric power generator 10 and the electrical energy storage device 50 is insufficient to meet the demand of the electrical user 200, as may occur during night-time or in bad weather, the control module 60 activates the fuel cell 40, drawing hydrogen from the storage device 30, and recharges the electrical energy storage device 50. At this point, the electrical energy storage device 50 is again able to meet the electric power requests of the electrical user 200.

It has been observed that the invention achieves the intended purpose and objects by providing an electric energy generation and storage plant capable of efficiently exploiting alternative energy sources to the main grid and maximizing the amount of electric power produced and stored.

Furthermore, the plant according to the invention is extremely versatile as it can be easily adapted to substantially all civil and industrial users.

Another advantage of the plant according to the invention resides in its high reliability and safety in use. The electric energy generation and storage plant according to the invention is susceptible to numerous modifications and variants, all within the scope of the inventive concept; moreover, all details may be replaced by technically equivalent elements. Naturally, the materials used, as well as the dimensions and shapes, may be any according to the requirements and the state of the art.

## Claims

1. Electric energy generation and storage plant (100), **characterized in that** it comprises:
- at least one electrical user (200);
- at least one electric power generator (10) from renewable sources;
- at least one hydrogen generator (20) configured to produce hydrogen and oxygen in gaseous form by electrolysis using water and at least part of the electric power produced by said electric power generator (10);
- at least one storage device (30) connected to said hydrogen generator (20) to store at least part of the hydrogen produced by said hydrogen generator (20);
- at least one fuel cell (40) connected to said storage device (30) to produce electric power using hydrogen stored in said storage device (30);
- at least one electrical energy storage device (50) electrically connected to said electric power generator (10) and said fuel cell (40) to receive electric power from at least one of them;
- at least one electrical energy conversion device (80) electrically connected to said electrical user (200), said electric power generator (10) and said electrical energy storage device (50);
- at least one control module (60) operatively connected to said fuel cell (40), said electrical energy storage device (50), and said electrical energy conversion device (80), and configured to control the charging of said electrical energy storage device (50) by means of said fuel cell (40) when below a minimum stored energy threshold of said electrical energy storage device (50).

2. Electric energy generation and storage plant (100) according to claim 1, **characterized in that** said at least one control module (60) is configured so that the surplus of electric power produced by said at least one electric power generator (10) is supplied in the following order:
- to said at least one electrical energy storage device (50) until fully charged or until reaching a predefined charge level, and
- to said at least one hydrogen generator (20).

3. Electric energy generation and storage plant (100) according to any one of the preceding claims, **characterized in that** said at least one control module (60) is configured so that, in the absence of electric power available from said at least one electric power generator (10), the electric power to be supplied to said at least one electrical energy storage device (50) is drawn from said at least one fuel cell (40).

4. Electric energy generation and storage plant (100) according to any one of the preceding claims, **characterized in that** said at least one electric power generator (10) is selected from a photovoltaic generator, a wind generator, a hydroelectric generator, a geothermal generator and/or a combination thereof.

5. Electric energy generation and storage plant (100) according to one or more of the preceding claims, **characterized in that** said at least one storage device (30) comprises metal hydrides for low-pressure hydrogen storage.

6. Electric energy generation and storage plant (100) according to one or more of the preceding claims, **characterized in that** said at least one hydrogen generator (20) comprises an electrolyser.

7. Electric energy generation and storage plant (100) according to one or more of the preceding claims, **characterized in that** said at least one control module (60) is configured so that the hydrogen produced by said at least one hydrogen generator (20) is supplied in order, to said at least one storage device (30) until fully filled or until reaching a predefined filling level, and to said at least one fuel cell (40) until fully charged or until reaching a predefined charge level of said at least one electrical energy storage device (50).

8. Electric energy generation and storage plant (100) according to one or more of the preceding claims, **characterized in that** it comprises at least one thermal recovery device (70) configured to recover at least part of the thermal energy produced by said at least one fuel cell (40) and/or at least part of the thermal energy produced by said at least one hydrogen generator (20);
said control module (60) being configured to supply thermal energy to at least one thermal user (300) by drawing it from said thermal recovery device (70).

9. Electric energy generation and storage plant (100) according to one or more of the preceding claims, **characterized in that** at least part of the hot water produced by said fuel cell (40) is supplied to said at least one thermal user (300) and/or to said at least one hydrogen generator (20).
